# EUROPEAN PATENT SPECIFICATION

(11) **EP 1 591 483 B1**
(45) Date of publication and mention of the grant of the patent: **24.11.2010**
(21) Application number: 04708058.5
(22) Date of filing: 04.02.2004
(51) Int. Cl.: C08L 23/16, C08L 9/02, C08K 3/22, C08K 9/04

(54) **FLAME-RETARDANT RUBBER COMPOSITION, RUBBER ARTICLES AND WIRE COVERING MATERIALS**
FLAMMHEMMENDE KAUTSCHUKZUSAMMENSETZUNG, KAUTSCHUKGEGENSTÄNDE UND DRAHTBESCHICHTUNGSMATERIALIEN
COMPOSITION EN CAOUTCHOUC IGNIFUGE, ARTICLES EN CAOUTCHOUC ET MATERIAUX DE RECOUVREMENT DE FILS

(30) Priority: 05.02.2003 JP 2003027758; 19.05.2003 JP 2003140974
(43) Date of publication of application: 02.11.2005
(73) Proprietor: JSR Corporation, Tokyo 104-8410 (JP)
(72) Inventor: MORIOKA, Seiji, c/o JSR Corporation, Tokyo 104-8410 (JP); KOBAYASHI, Nobutoshi, c/o JSR Corporation, Tokyo 104-8410 (JP); GOTOU, Hidekatsu, c/o JSR Corporation, Tokyo 104-8410 (JP)
(74) Representative: TBK-Patent
(86) International application number: PCT/JP2004/001103
(87) International publication number: WO 2004/069921

(56) References cited:
- EP-A- 1 095 980
- JP-A- 2000 063 568
- JP-A- 2000 344 979
- JP-A- 2001 131 355
- JP-A- 2002 173 682
- JP-A- 2002 173 682
- JP-A- 2002 265 654
- JP-A- 2003 003 167
- JP-A- 2003 003 167
- JP-A- 2003 003 171
- JP-A- 2003 003 171

## Description

### TECHNICAL FIELD

The present invention relates to a flame retardant rubber composition with excellent weather resistance, oil resistance, flame retardance, mechanical properties, and processability. More particularly, the present invention relates to a flame retardant rubber composition having excellent flame retardance; free from production of toxic gas such as halogen gas and the like when burnt; free from environmental pollutant substances such as phosphorus, lead, and the like; exhibiting superior well-balanced characteristics such as weather resistance, mechanical properties, and the like; and particularly useful for a variety of applications such as a roll, belt, and sealing material for copying machines, an electric-wire covering material, and the like and to a rubber product made from the rubber composition.

### BACKGROUND ART

Ethylene/α-olefin random copolymers (hereinafter abbreviated as "EP(D)M" from time to time) represented by ethylene/propylene/diene copolymer rubber are widely used for automobile parts, industrial rubber parts, electrical parts, materials for goods used in civil engineering and construction, and the like due to their excellent mechanical properties, heat resistance, weather resistance, and the like. Environmental conditions in which rubber products such as a roll, belt, and electric wire covering material are used are increasingly becoming severe due to the recent increased performance of vehicles, electric products, and the like. Since a rise in the atmospheric temperature among the environmental conditions in which these rubber products are used is remarkable, improvement of flame retardance in high temperature use conditions is desired.

Use of a halogen-containing flame retardant is a most common method known in the art to provide flame retardance for rubber products. Although the use of a small amount of such a flame retardant exhibits a flame retardant effect, the flame retardant has a problem of generating corrosive and toxic gas when burnt.

Products containing a phosphorus flame retardant instead of a halogen-containing flame retardant are known in the art as a flame retardant rubber composition (for example, Japanese Patent Application Laid-open No. 2-263851). However, a phosphorus flame retardant requires a measure for preventing bleed-out which occurs due to its hygroscopic properties. Although a certain effect of bleed-out prevention can be attained by the addition of an olefinic rubber and a silane coupling agent, the resulting product is not necessarily satisfactory from the viewpoint of characteristics such as pliability, flexibility, and the like, as well as from the viewpoint of environmental harmonization.

In recent years, a method of using a hydrated inorganic metal compound such as aluminum hydroxide or magnesium hydroxide, and also olefin synthetic rubber as an non-pollutant and environmentally harmonious flame retardant has been investigated (for example, Japanese Patent Application Laid-open No. 6-107870). However, a large amount of such a hydrated inorganic metal compound must be added to ensure adequately high flame retardance. This not only results in a decrease in the mechanical properties, particularly tensile strength, but also impairs flexibility and processability. Oil resistance is another property required according to the intended use.

On the other hand, taking advantage of excellent properties of EP(D)M, compositions comprising EP(D)M and various rubbers have been studied to provide EP(D)M with additional characteristics. Among the compositions, a composition containing an unsaturated nitrile/conjugated diene copolymer (hereinafter abbreviated as "NBR" from time to time) is known as a rubber composition excelling in heat resistance, aging resistance, oil resistance, and weather resistance. However, it is difficult to obtain a homogeneous composition by blending these two rubbers, because each has a solubility coefficient significantly differing from the other. In addition, since each rubber has a vulcanizing rate differing from the other, the vulcanized product obtained from the composition has limited properties. For these reasons, Japanese Patent Application Laid-open No. 59-226038, for example, proposed a combination of a nitrile rubber having a functional group and a halogenated EP(D)M to improve the mechanical characteristics of a blend of EP(D)M and NBR. Japanese Patent Application Laid-open No. 8-127682 proposed a rubber composition comprising an acrylate-unsaturated nitrile/conjugated diene copolymer, an ethylene/propylene copolymer, and a hydrogenated product of a conjugated diene copolymer. However, if a hydrated inorganic metal compound, such as aluminum hydroxide or magnesium hydroxide, which is recently attracting attention as an environmentally harmonious, pollution-free and halogen-free flame retardant, is added to these rubber compositions, a large amount of the hydrated inorganic metal compound must be added to ensure adequate flame retardance. This not only results in a decrease in the mechanical properties, particularly tensile strength, but also impairs flexibility and processability.

The present invention has been achieved in view of this situation and has an object of providing a flame retardant rubber composition exhibiting excellent flame retardance, weather resistance, mechanical characteristics, processability, and oil resistance, and useful for various applications such as a roll, belt, and sealing material for copying machines, a covering material for wiring in instruments, an electric wire covering material, automobile harnesses, an insulating tape, and the like.

### DISCLOSURE OF THE INVENTION

As a result of extensive studies to achieve the above object, the inventor of the present invention has found that mechanical characteristics can be increased by using surface-treated natural magnesium hydroxide. This finding has led to the completion of the present invention.

Specifically, the present invention provides a flame retardant rubber composition comprising,
(A) 95-15 parts by mass of an ethylene/α-olefin random copolymer,
(B) 5-85 parts by mass of an unsaturated nitrile/conjugated diene rubber (provided that (A) + (B) = 100 parts by mass), and
(D) 50-400 parts by mass of surface-treated natural magnesium hydroxide.

The present invention further provides a flame retardant rubber composition comprising,
(A) 3-62 parts by mass of an ethylene/α-olefin random copolymer,
(B) 35-94 parts by mass of an unsaturated nitrile/conjugated diene rubber,
(C) 3-62 parts by mass of a hydrogenated diene polymer (provided that (A) + (B) + (C) = 100 parts by mass), and
(D) 50-400 parts by mass of surface-treated natural magnesium hydroxide.

The component (D) in the present invention is magnesium hydroxide prepared by pulverizing natural mineral containing magnesium hydroxide as a main component and treating the surface of the pulverized material with at least one agent selected from the group consisting of fatty acid ester, wax, fatty acid, metal salt of fatty acid, hardened oil, silane coupling agent, and titanate coupling agent, preferably with a fatty acid ester or wax.

In the rubber composition of the present invention, the ethylene/α-olefin random copolymer of component (A) preferably has a Mooney viscosity (ML₁₊₄, 100°C) of 20-300. The unsaturated nitrile/conjugated diene rubber of the component (B) in the present invention has a content of unsaturated nitrile unit of 33-70 % by mass, and preferably 40-60 % by mass.

The hydrogenated diene polymer of the component (C) in the rubber composition of the present invention is preferably a hydrogenated product of a block copolymer containing a polybutadiene block with a vinyl bond content of less than 25% and a conjugated-diene polymer block with a vinyl bond content of 25% or more, but 90% or less.

The rubber composition of the present invention preferably further comprises (E) 1-10 parts by mass of a metal salt of ethylenically unsaturated carboxylic acid.

The rubber composition of the present invention preferably has a limiting oxygen index (LOI) of 28% or more.

The rubber composition of the present invention can be crosslinked to produce rubber products useful as an electric wire covering material and the like.

### BEST MODE FOR CARRYING OUT THE INVENTION

The flame retardant rubber composition of the present invention will now be described in more detail by way of embodiments.

The flame retardant rubber composition of the present invention is broadly classified into a rubber composition containing three components consisting of (A) an ethylene/α-olefin random copolymer, (B) an unsaturated nitrile/conjugated diene rubber, and (D) natural magnesium hydroxide as main components (first embodiment), a rubber composition containing four components consisting of (A) an ethylene/α-olefin random copolymer, (B) an unsaturated nitrile/conjugated diene rubber, (C) a hydrogenated diene polymer, and (D) natural magnesium hydroxide as main components (second embodiment), and a rubber composition comprising (E) a metal salt of ethylenically unsaturated carboxylic acid in addition to the rubber composition of the first embodiment or second embodiment (third embodiment).

Each component will be described in more detail.

### (A) Ethylene/α-olefin random copolymer

As the α-olefin random copolymer (hereinafter referred to from time to time as component (A)), random copolymers made from ethylene and α-olefin with a carbon atom content of 3-10 as major components, such as ethylene/propylene copolymer rubber, ethylene/propylene/non-conjugated diene ternary copolymer rubber, ethylene/1-butene copolymer rubber, and ethylene/1-butene/non-conjugated diene ternary copolymer rubber, can be given.

As specific examples of the α-olefin with a carbon atom content of 3-10, propylene, 1-butene, 1-pentene, 1-hexene, 1-heptene, 1-octene, and the like can be given. Propylene and 1-butene are particularly preferable.

As examples of the conjugated dienes, 1,4-pentadiene, 1,4-hexadiene, 1,5-hexadiene, 1,7-octadiene, 1,9-decadiene, 3,6-dimethyl-1,7-octadiene, 4,5-dimethyl-1,7-octadiene, 5-methyl-1,8-nonadiene, dicyclopentadiene, 5-ethylidene norbornene, 5-vinyl-2-norbornene, and 2,5-norbornadiene can be given. Of these, 1,4-hexadiene, dicyclopentadiene, and 5-ethylidene-2-norbornene are preferable.

In these ethylene/α-olefin random copolymers, 10 mol% or more of α-olefin is preferably copolymerized. As a non-conjugated diene, ethylidene norbornene, dicyclopentadiene, and 1,4-hexadiene are preferable. The content of the non-conjugated diene is preferably 3-10 mol%, more preferably 3-8 mol%, for 100 mol% of the total amount of ethylene and α-olefin. In terms of the iodine number, such a non-conjugated diene content is 40 or less, preferably 5-30, and more preferably 7-20. An ethylene content more than 90 mol% and α-olefin content of less than 10 mol% in these ethylene/α-olefin random copolymers is undesirable, because the resulting copolymer rubber exhibits only inadequate flexibility. The Mooney viscosity (ML₁₊₄, 100°C) of the ethylene/α-olefin random copolymer is 20-300, preferably, 40-200, and more preferably 60-200. The crystallinity determined by X-ray diffraction measurement is 20% or less, and preferable 15% or less. The crystallinity exceeding 20% is undesirable because the flexibility of the copolymer rubber tends to decrease.

Although not specifically limited, the component (A) is prepared by polymerization using a known catalyst such as a vanadium catalyst, titanium catalyst, or metallocene catalyst. In the case of the vanadium catalyst, for example, the component (A) can be manufactured by polymerizing ethylene, an α-olefin, and a non-conjugated diene in the presence of a catalyst containing at least one vanadium compound soluble in a solvent and at least one organoaluminum compound, while supplying hydrogen as a molecular weight regulator. Either vapor phase polymerization (a fluid bed or stirring bed) or liquid polymerization (a slurry method or solution method) can be used for polymerization. As the vanadium compound soluble in a solvent, a reaction compound of at least one of VOCl₃, VCl₄, VOCl₃, or VCl₄ with an alcohol is desirable. As the alcohol, methanol, ethanol, n-propanol, isopropanol, n-butanol, sec-butanol, t-butanol, n-hexanol, n-octanol, 2-ethylhexanol, n-decanol, n-dodecanol, and the like can be given. Of these, alcohols with a carbon atom content of 3-8 is preferable. As examples of the organoaluminum compound, aluminum, triisobutylaluminum, tri-n-hexylaluminum, diethylaluminum monochloride, diisobutylaluminum monochloride, ethylaluminum sesquichloride, butylaluminum sesquichloride, ethylaluminum dichloride, butylaluminum dichloride, methylaluminoxane which is a reaction product of trimethylaluminum and water, and the like can be given. Of these, ethylaluminum sesquichloride, butylaluminum sesquichloride, a mixture of ethylaluminum sesquichloride and triisobutylaluminum, and a mixture of triisobutylaluminum and butylaluminum sesquichloride are preferable. As the solvent, a hydrocarbon solvent can usually be used. Preferable hydrocarbon solvents are n-pentane, n-hexane, n-heptane, n-octane, isooctane, cyclohexane, and the like. These hydrocarbon solvents may be used either individually or in combination of two or more.

An extending oil polymer added during polymerization may function as the later-described softening agent for the ethylene/α-olefin random copolymer of the present invention.

### (B) Unsaturated nitrile/conjugated diene rubber

As the unsaturated nitrile/conjugated diene rubber (B) (hereinafter referred to from time to time as "component (B)"), a copolymer rubber of a conjugated diene and an unsaturated nitrile, a copolymer rubber of a conjugated diene, an unsaturated nitrile, and a copoplymerizable monomer having a polar group other than unsaturated nitrile, and a copolymer rubber in which these copolymer rubbers are partially crosslinked.

As examples of the conjugated diene (hereinafter referred to from time to time as "(b-1)") from which the component (B) is formed, 1,3-butadiene, isoprene, 1,3-hexadiene, 2-methyl-1,3-butadiene, 2,3-dimethyl butadiene, 2-trimethoxy silyl-1,3-butadiene, 1,3-pentadiene, and 2,4-dimethyl-1,3-butadiene can be given. These conjugated dienes can be used either individually or in combination of two or more. Of the above conjugated dienes, 1,3-butadiene and isoprene are particularly preferable.

As the unsaturated nitrile (hereinafter referred to from time to time as "(b-2)") from which the component (B) is formed, acrylonitrile, methacrylonitrile, α-ethylacrylonitrile, α-isopropylacrylonitrile, α-chloroacrylonitrile, α-fluoroacrylonitrile, ethacrylonitrile, and the like can be mentioned. Of these, acrylonitrile is particularly preferable.

As examples of the copoplymerizable monomer having a polar group other than unsaturated nitrile (hereinafter referred to from time to time as "(b-3)") from which the component (B) is formed, methyl acrylate, ethyl acrylate, n-propyl acrylate, isopropyl acrylate, n-butyl acrylate, t-butyl acrylate, s-butyl acrylate, 2-methylbutyl acrylate, 3-methylbutyl acrylate, n-hexyl acrylate, n-heptyl acrylate, n-octyl acrylate, 2-ethylhexyl acrylate, acrylamide, N-hydroxymethyl(meth)acrylamide, N-(2-hydroxyethyl)(meth)acrylamide, N,N-bis(2-hydroxyethyl)(meth)acrylamide, 2-hydroxyethyl (meth)acrylate, 2-hydroxypropyl (meth)acrylate, 2-hydroxyethyl crotonate, 2-hydroxypropyl crotonate, 2-hydroxyethyl cinnamate, 2-hydroxypropyl cinnamate, allyl alcohol, o-hydroxystyrene, m-hydroxystyrene, p-hydroxystyrene, ethylene glycol mono(meth)acrylate, propylene glycol mono(meth)acrylate, vinylamine, allylamine, o-aminostyrene, m-aminostyrene, p-aminostyrene, 2-aminoethyl (meth)acrylate, 2-aminopropyl (meth)acrylate, glycidyl (meth)acrylate, allyl glycidyl ether, acrolein, vinyl methyl ketone, divinyl phthalate, diallyl phthalate, N,N-methylene bis(meth)acrylamide, N,N-ethylene bis(meth)acrylamide, N,N-hexamethylene bis(meth)acrylamide, (meth)acrylic acid, crotonic acid, cinnamic acid, itaconic acid, maleic acid, fumaric acid, citraconic acid, mesaconic acid, 2-hydroxyethyl (meth)acrylate, (meth)acrylic acid, 2-hydroxybutyl methacylate, 2-hydroxyethyl (meth)acrylate, 2-hydroxybutyl (meth)acrylate, 2-hydroxypropyl (meth)acrylate, dimethylaminoethyl (meth)acrylate, diethylaminoethyl (meth)acrylate, w-carboxy-polycaprolactone mono(meth)acrylate, tetrahydrofurfuryl acrylate, di(meth)acrylate of polyalkylene glycol of polyethylene glycol (with the number of the alkylene glycol unit of 2-23), di(meth)acrylate of polyalkylene glycol of polypropylene glycol (with the number of the alkylene glycol unit of 2-23), and the like can be given. These monomers may be used either individually or in combination of two or more. Of these, acrylic acid, ethyl acrylate, n-butyl acrylate, t-butyl acrylate, and s-butyl acrylate are preferable.

The amount of the conjugated diene units in the component (B) is 15-65 % by mass, and preferably 20-50 % by mass, for 100 % by mass of (b-1)+(b-2)+(b-3). If the content of the monomer (b-1) is less than 15 % by mass, the elasticity of the rubber tends to decrease. On the other hand, if the content exceeds 65 % by mass, the mutual solubility of the rubber with magnesium hydroxide is impaired, resulting in poor mechanical strength of the resin composition.

The content of the unsaturated nitrile unit (b-2) is preferably 33-70 % by mass, and more preferably 40-60 % by mass. If the content of the monomer (b-2) is less than 33 % by mass, the mutual solubility of the rubber with magnesium hydroxide is impaired, resulting in poor mechanical strength of the resin composition. Moreover, oil resistance tends to be impaired. If the content of the monomer (b-2) is more than 70 % by mass, on the other hand, the elasticity of the rubber may decrease.

The content of the copoplymerizable monomer unit having a polar group other than the unsaturated nitrile (b-3) is 0-50 % by mass, and preferably 0-40 % by mass. If the content of the monomer (b-3) is more than 50 % by mass, the elasticity of the rubber tends to decrease.

A partially crosslinked copolymer rubber contained in the component (B) of the present invention can be obtained by copolymerizing a polyfunctional unsaturated monomer with the above monomers (b-1) and (b-2) or the above (b-1), (b-2), and (b-3).

The polyfunctional unsaturated monomer (hereinafter referred to from time to time as "(X)") has two or more radically polymerizable vinyl groups in the molecule and can usually be polymerized by emulsion polymerization. As examples, a polyvalent allyl compound, (meth)acrylate compound, divinyl compound, bismaleimide compound, and oxime compound can be given. More specific examples include triallyl cyanulate, triallyl isocyanurate, trimethylolpropane tri(meth)acrylate, N,N'-m-phenylene bismaleimide, ethylene glycol di(meth)acrylate, 1,3-butanediol-di(meth)acrylate, 1,4-butanediol di(meth)acrylate, 1,6-hexanediol di(meth)acrylate, polyethylene glycol di(meth)acrylate, 2,2'-bis(4-methacryloyldiethoxyphenyl)propane, pentaerythritol tri(meth)acrylate, divinylbenzene, bismaleimide, N,N'-methylenebis acrylamide, p-quinonedioxime, p, p'-dibenzoylquinonedioxime, and triazinethiol. These polyfunctional unsaturated monomers may be used either individually or in combination of two or more.

The unsaturated nitrile/conjugated diene rubber (B) can be prepared by radical polymerization, anionic polymerization, and the like, without any specific limitations. The radical polymerization includes mass polymerization, suspension polymerization, emulsion polymerization, and the like. Since acrylonitrile rubber latex is used in the present invention, the emulsion polymerization in which a stable emulsion dispersion can be obtained at the time of completing the polymerization is particularly preferred. A common method can be employed for the emulsion polymerization. One example of such a method comprises emulsifying specified monomers in an aqueous medium in the presence of an emulsification agent, adding a radical polymerization initiator to start polymerization, and adding a polymerization terminating agent to terminate the polymerization when a prescribed polymerization conversion rate is reached.

As the emulsification agent, an anionic surfactant, nonionic surfactant, cationic surfactant, amphoteric surfactant, and the like can be given. A fluorine-containing surfactant may also be used as an emulsifier. These emulsifiers may be used individually or in combination of two or more. Anionic surfactants are most commonly used. For example, a salt of long chain fatty acid with 10 or more carbon atoms, a rosinate, and the like can be used. Specific examples include a sodium salt, potassium salt, and the like of capric acid, lauric acid, myristic acid, palmitic acid, oleic acid, stearic acid, and the like.

As examples of the radical polymerization initiator, organic peroxides such as benzoyl peroxide, lauroyl peroxide, t-butyl hydroperoxide, cumene hydroperoxide, paramethane hydroperoxide, di-t-butyl peroxide, and dicumylperoxide can be given. A diazo compound represented by azobisisobutyronitrile, an inorganic peroxide represented by potassium persulfate, and a redox catalyst represented by the combination of these peroxides and a ferrous sulfate can also be used. These radical polymerization initiators may be used individually or in combination of two or more.

A chain transfer agent to control the molecular weight of the unsaturated nitrile/diene rubber (B) may be used. As the chain transfer agent, alkylmercaptans such as t-dodecylmercaptan and n-dodecylmercaptan, carbon tetrachloride, thioglycols, diterpene, terpinolene, γ-terpinenes, and the like can be used.

In the polymerization to produce the unsaturated nitrile/conjugated diene rubber (B), either the total amount of the components such as monomers, emulsifiers, radical polymerization initiators, chain transfer agents, and the like may charged to a reaction vessel to start the polymerization or any components among them may be continuously or intermittently added during the reaction. The polymerization is preferably carried out using a reaction vessel from which oxygen has been removed at a polymerization temperature of 0-100°C, preferably at 0-80°C. Reaction conditions such as temperature, rate of stirring, and the like may be appropriately changed during the reaction. The polymerization may be carried out either continuously of batchwise.

The reaction is terminated by adding a polymerization terminating agent when a predetermined polymerization conversion rate is reached. As the polymerization terminating agent, amine compounds such as hydroxylamine and diethylhydroxylamine, quinone compounds such as hydroquinone, and the like may be used. After terminating the polymerization, unreacted monomers are removed from the reaction system by steam distillation or the like, as required, and the resulting latex is coagulated to obtain the unsaturated nitrile/conjugated diene rubber of the present invention.

Although there are no specific limitations to the molecular weight of the unsaturated nitrile/conjugated diene rubber (B), it is desirable that the diene rubber has a Mooney viscosity (ML₁₊₄, 100°C) in the range from 20 to 200.

The amount of the component (A) (ethylene/α-olefin random copolymer (A)) in the rubber composition of the first embodiment is 95-15 parts by mass, preferably 80-20 parts by mass, for 100 parts by mass of the component (A) and the unsaturated nitrile/conjugated diene rubber (B). The amount of the component (B) in the rubber composition of the first embodiment is 5-85 parts by mass, and preferably 20-80 parts by mass.

The content of the unsaturated nitrile/conjugated diene rubber (B) in an amount of 15 parts by mass or more can further improve flame retardance and oil resistance. If the content exceeds 90 parts by mass, one the other hand, weather resistance tends to become worse.

### (C) Hydrogenated diene polymer

The hydrogenated diene polymer (C) (hereinafter referred to from time to time as "component (C)") used in the present invention is a hydrogenate of a block copolymer (hereinafter referred to from time to time as "unhydrogenated copolymer") having at least one of the blocks of the following (i) and/or (ii) and at least one of the blocks of the following (iii) and/or (iv).
(i) An aromatic vinyl compound polymer block with an aromatic vinyl compound content of 80 % by mass or more
(ii) A polybutadiene polymer block with a vinyl bond content of less than 25%
(iii) A conjugated diene polymer block with a vinyl bond content of 25-90%
(iv) A random-copolymer block of an aromatic vinyl compound and a conjugated diene

Such an unhydrogenated copolymer can be easily obtained by living anionic polymerization of conjugated dienes or a vinyl aromatic compound and a conjugated diene using an organic alkali metal compound as an initiator in an inert organic solvent, for example, an aliphatic hydrocarbon solvent such as pentane, hexane, heptane, and octane, an alicyclic hydrocarbon solvent such as cyclopentane, methylcyclopentane, cyclohexane, and methylcyclohexane, or an aromatic hydrocarbon solvent such as benzene, xylene, toluene, or ethylbenzene, to produce a block copolymer and hydrogenating the block copolymer.

As the vinyl aromatic compound, styrene, t-butylstyrene, α-methylstyrene, p-methylstyrene, p-ethylstyrene, divinylbenzene, 1,1-diphenylstyrene, vinylnaphthalene, vinylanthracene, N,N-diethyl-p-aminoethylstyrene, vinylpyridine, and the like can be given. Of these, styrene is preferable.

As examples of the conjugated diene, 1,3-butadiene, isoprene, 2,3-dimethyl-1,3-butadiene, 1,3-pentadiene, 2-methyl-1,3-octadiene, 1,3-hexadiene, 1,3-cyclohexadiene, 4,5-diethyl-1,3-octadiene, 3-butyl-1,3-octadiene, myrcene, and chloroprene can be given. Of the above conjugated dienes, 1,3-butadiene and isoprene are preferable.

Although there are no specific limitations to the proportion of the conjugated diene and vinyl aromatic compound in the above unhydrogenated copolymer, usually, for 5-100 % by mass of conjugated diene, 0-95 % by mass of the vinyl aromatic compound can be used.

The above random copolymer block (iv) may be a taper type copolymer in which the content of the aromatic vinyl compound continuously changes in one molecule. As examples of the block copolymer containing the above polymer blocks (i)-(iv) before hydrogenation, the following combinations can be given. (i)-(iii), (i)-(iv), (ii)-(iii), [(i)-(iii)]x-Y, [(i)-(iv)]x-Y, [(ii)-(iii)]x-Y, (i)-(iii)-(ii), (i)-(iii)-(iv), (i)-(iii)-(i), (i)-(iv)-(i), (i)-(iv)-(iii), (ii)-(iii)-(ii), [(i)-(iii)-(ii)]x-Y, [(i)-(iii)-(i)]x-Y, [(i)-(iv)-(i)]x-Y, [(i)-(iv)-(iii)]x-Y, (i)-(iii)-(i)-(iii), (iii)-(i)-(iii)-(i), [(i)-(iii)-(i)-(iii)]x-Y, [(iii)-(i)]x-Y, [(iv)-(i)]x-Y, (ii)-(i)-(iii)-(i), (iii)-(i)-(iv)-(i), (iii)-(i)-(iv)-(iii), [(iii)-(i)-(ii)-(iii)]x-Y, [(iv)-(i)-(ii)-(i)]x-Y, [(iv)-(i)-(iii)-(i)]x-Y, [(iv)-(i)-(iv)-(i)]x-Y, [(iv)-(i)-(iv)-(iii)]x-Y, (iv)-(i)-(ii)-(i)-(ii), (iv)-(ii)-(i)-(ii)-(i), (iv)-(i)-(iii)-(i)-(iii), (iv)-(iii)-(i)-(iii)-(i), [(iv)-(i)-(ii)-(i)-(ii)]x-Y, (iv)-(i)-(ii)-(i)-(ii)-(i), and [(iv)-(i)-(ii)-(i)-(ii)-(i)]x-Y

In the above formulas, x ≥ 2 and Y is a residual group of a coupling agent. Among the above combinations, hydrogenated products of block copolymers containing at least one polymer block consisting of the above (ii) and (iii) are particularly preferable.

As the above-mentioned coupling agent, a halogenated compound, an epoxy compound, a carbonyl compound, a polyvinyl compound, and the like can be mentioned, for example. Specific examples include methyldichlorosilane, methyltrichlorosilane, butyltrichlorosilane, tetrachlorosilane, dibromoethane, epoxidated soybean oil, divinylbenzene, tetrachlorostannate, butyltrichlorostannate, tetrachlorogermanium, bis(trichlorosilyl)ethane, diethyl adipate, dimethyl adipate, dimethyl terephthalate, diethyl terephthalate, and polyisocyanate.

The hydrogenated diene polymer of the present invention can be obtained by selectively hydrogenating the block copolymer obtained as mentioned above. The hydrogenation degree wherein 80% or more, and preferably 90% or more, of the double bonds originating from the conjugated diene is saturated is preferable.

The weight average molecular weight of the hydrogenated diene polymer of the present invention is not specifically limited, but is usually 30,000-2,000,000, preferably 40,000-1,000,000, and more preferably 50,000-500,000.

It is possible to introduce a functional group such as an amino group, alkoxysilyl group, hydroxyl group, acid-anhydride group, and epoxy group into the diene polymer to use the polymer as a modified hydrogenated diene polymer. The following copolymers can be given as examples of such modified hydrogenated diene polymer.
(I) A polymer obtained by polymerizing a conjugated diene monomers or a mixture of a vinyl aromatic monomer and a conjugated diene monomer in the presence of an organic alkali metal compound, reacting active sites of the resulting polymer with an epoxy compound or a ketone compound, and hydrogenating the resulting polymer.
(II) A polymer obtained by polymerizing a conjugated diene monomer or a mixture of a vinyl aromatic monomer and a conjugated diene monomer in the presence of an organic alkali metal compound, hydrogenating the resulting polymer, reacting the hydrogenated polymer with at least one of the compounds selected from the group consisting of (meth)acryloyl group-containing compounds, epoxy group-containing compounds, and maleic anhydride in a solution or in an extruder or a kneader.
(III) A polymer obtained by polymerizing a conjugated diene monomers or a mixture of a vinyl aromatic monomer and a conjugated diene monomer in the presence of an organic alkali metal compound and introducing a functional group such as -OH group, -NH-CO group, or -NH₂ group in the center of the molecule using epoxidated 1,2-polybutadiene, epoxidated soybean oil, epoxidated linseed oil, benzene-1,2,4-triisocyanate, diethyl oxalate, diethyl malonate, diethyl adipate, dioctyl adipate, dimethyl phthalate, diethyl phthalate, diethyl terephthalate, pyromellitic acid dianhydride, or the like as a coupling agent.

The amount of the component (A) in the rubber composition of the second embodiment is 3-62 parts by mass, preferably 5-55 parts by mass, and more preferably 10-40 parts by mass for 100 parts by mass of the component (A), component (B), and component (C). If the amount of the component (A) is less than 3 parts by mass, weather resistance of the products is inferior; if more than 62 parts by mass, oil resistance of the products is inferior.

The amount of the component (B) in the rubber composition of the second embodiment is 35-94 parts by mass, preferably 40-80 parts by mass, and more preferably 50-80 parts by mass. If the amount of the component (B) is less than 35 parts by mass, oil resistance of the products is inferior; if more than 94 parts by mass, weather resistance of the products is inferior.

The amount of the component (C) in the rubber composition of the second embodiment is 3-62 parts by mass, preferably 5-55 parts by mass, and more preferably 10-40 parts by mass. If the amount of the component (C) is less than 3 parts by mass, mechanical properties of the products is inferior; if more than 62 parts by mass, oil resistance of the products is inferior.

### (D) Magnesium hydroxide

The magnesium hydroxide (hereinafter referred to from time to time as "component (D)") used in the present invention is obtained by pulverizing natural mineral such as a natural brucite ore and treating the surface of the pulverized particles.

Magnesium hydroxide generally used for a flame retardant is broadly classified into magnesium hydroxide manufactured by a synthetic method and magnesium hydroxide manufactured by a natural mineral grinding method. Magnesium hydroxide manufactured by a synthetic method includes, for example, magnesium hydroxide obtained by adding sea water or brine to caustic alkali or a slack lime slurry to react magnesium in the sea water or brine with an alkali, magnesium hydroxide obtained by adding sodium hydroxide to a magnesium hydroxide slurry and treating the mixture with hot water, magnesium hydroxide obtained by treating a basic magnesium salt slurry with hot water, and magnesium hydroxide obtained by reacting a magnesium salt solution with ammonia. These magnesium hydroxides cannot exhibit the effect of the present invention even if the surface of the particles is treated.

The surface treated magnesium hydroxide of the present invention is obtained by pulverizing natural mineral containing magnesium hydroxide as a main component using a pulverizing machine which can be heated and treating the surface of the pulverized material with at least one of the surface treating agents selected from the group consisting of fatty acid ester, wax, fatty acid, metal salt of fatty acid, hardened oil, silane coupling agent, and titanate coupling agent, or by simultaneously conducting the pulverization and surface treatment, to produce particles with a volume average particle diameter of 5 µm or less, of which the surface is covered with the above surface treating agent.

The average volume particle diameter is preferably 1-5 µm, and more preferably 3-5 µm, and the specific surface area is preferably 7-20 cm²/g. The amount of the surface treating agent to be added is about 0.5-5 % by mass of the total amount of the magnesium hydroxide and surface treating agent. When heated, the heating temperature is usually about 50-200°C, and preferably about 80-150°C. Magnesium hydroxide particles of which the surface is not treated cannot exhibit the effect of the present invention, since such particles have degraded properties due to undue aggregation.

As examples of the fatty acid ester used as the surface treating agent, monoesters such as methyl laurate, methyl myristate, methyl palmitate, methyl stearate, methyl oleate, methyl erucate, methyl behenate, butyl laurate, butyl stearate, isopropyl myristate, isopropyl palmitate, octyl palmitate, coconut fatty acid octyl ester, octyl stearate, special beef tallow fatty acid octyl ester, lauryl laurate, stearyl stearate, long-chain fatty acid higher alcohol ester, behenyl behenate, and cetyl myristate; and special fatty acid esters such as neopentyl polyol long-chain fatty acid ester, partially esterified neopentyl polyol long-chain fatty acid, neopentyl polyol fatty acid ester, neopentyl polyol medium-chain fatty acid ester, neopentyl polyol C9-chain fatty acid ester, dipentaerythritol long-chain fatty acid ester, complex medium-chain fatty acid ester, and the like can be given.

As the fatty acid used as the surface treating agent, stearic acid, oleic acid, palmitic acid, linolic acid, lauric acid, caprylic acid, behenic acid, montanic acid, and the like can be given.

As the metal salt of fatty acid used as the surface treating agent, metal salts of stearic acid, oleic acid, palmitic acid, linolic acid, lauric acid, caprylic acid, behenic acid, montanic acid, or the like with a metal such as Na, K, Al, Ca, Mg, Zn, Ba, Co, Sn, Ti, or Fe can be given.

As the hardened oil used as the surface treating agent in the present invention, beef tallow oil, castor oil, and the like can be given.

As the silane coupling agent used as the surface treating agent in the present invention, vinyltrimethoxysilane, vinyltriethoxysilane, vinyl tris(β-methoxyethoxy)silane, vinyltrichlorosilane, vinyltriacetoxysilane, N-(β-aminoethyl)-γ-aminopropyltrimethoxysilane, γ-aminopropyltrimethoxysilane, γ-aminopropyltriethoxysilane, γ-glycidoxypropyltrimethoxysilane, γ-glycidoxypropylmethyldimethoxysilane, β-(3,4-epoxycyclohexyl)ethyltrimethoxysilane, γ-methacryloxypropyltrimethoxysilane, γ-methacryloxypropyl tris(β-methoxyethoxy)silane, γ-mercaptopropyltrimethoxysilane, methyltrimethoxysilane, methyltriethoxysilane, hexamethyldisilazane, γ-anilinopropyltrimethoxysilane, N-[β-(N-vinylbenzalamino)ethyl]-γ-aminopropyltrimethoxysilane·hydrochloride, and the like can be given.

As the titanium coupling agents used as the surface treating agent in the present invention, isopropyltriisotearoyl titanate, isopropyltri(N-aminoethyl-aminoethyl) titanate, diisopropyl bis(dioctylphosphate)titanate, tetraisopropyl bis(dioctylphosphite)titanate, tetraoctyl bis(ditridecylphosphite)titanate, tetra(2,2-diallyloxymethyl-1-butyl) bis(ditridecyl)phosphite titanate, bis(dioctylpyrophosphate)oxyacetate titanate, bis(dioctylpyrophosphate)ethylene titanate, and the like can be used.

Particularly preferable surface treating agents are fatty acid esters and wax.

As required, an ammonium polyphosphate flame retardant, a phosphate flame retardant, a silicone compound, quartz, and the like may be used to increase the flame resistant effect. In addition, a flame retardant adjuvant such as water glass, as well as silicon nitride staple fiber and the like which can prevent dripping may be added.

In either the first embodiment or second embodiment, the amount of the component (D) in the composition of the present invention is 50 parts by mass or more, and preferably 65 parts by mass or more for 100 parts by mass of the total of the component (A) and component (B) or the total of the component (A), component (B), and component (C). If less than 50 parts by mass, a composition exhibiting sufficient flame resistance cannot be obtained. The upper limit is 400 parts by mass, and preferably 200 parts by mass. If the amount of the hydroxide is too small, the flame retarding effect is inadequate. If the amount of the hydroxide is excessive, on the other hand, not only is it difficult to knead the composition, but also the characteristics as an elastomer and mechanical properties of the rubber are remarkably impaired.

A flame retardant rubber composition with a limited oxygen index (LOI) of 28% or more can be obtained by reducing the content of the component (D).

### (E) Metal salt of ethylenically unsaturated carboxylic acid

As examples of the metal salt of ethylenically unsaturated carboxylic acid (E) (hereinafter referred to from time to time as "component (E)") used in the third embodiment of the present invention, a metal salt of at least one of unsaturated monocarboxylic acids such as acrylic acid, methacrylic acid, crotonic acid, and 3-butenic acid; unsaturated dicarboxylic acids such as maleic acid, fumaric acid, and itaconic acid; monoesters of unsaturated dicarboxylic acids such as monomethyl maleate, monoethyl maleate, and monoethyl itaconate; unsaturated polycarboxylic acids other than the dicarboxylic acids mentioned above; and esters of unsaturated polycarboxylic acids with at least one free carboxyl group being left unesterified can be given. There are no specific limitations to the metal in as much as the metal can form a salt with the ethylenically-unsaturated carboxylic acid. Particularly preferable metals are zinc, magnesium, calcium, and aluminum. Of these metal salts of ethylenically-unsaturated carboxylic acid, zinc methacrylate is particularly preferable due to its excellent properties and easy availability. When zinc methacrylate is used, a reaction product of one mol of methacrylic acid with 0.5-3.2 mols, preferably 0.5-2.5 mols, of a zinc compound such as zinc oxide or zinc carbonate is preferable.

When a metal salt of ethylenically-unsaturated carboxylic acid (E) is added, the amount of the component (E) is 1-10 parts by mass for 100 parts by mass of the total of component (A) and component (B) or for 100 parts by mass of the total of component (A), component (B), and component (C). If this amount is less than one part by mass, mechanical characteristics cannot be improved; if more than 10 parts by mass, the composition cannot be kneaded with ease.

### Other components

When presenting the rubber composition of the present invention to practical use, a crosslinking agent, filler, plasticizer, and the like are optionally incorporated in addition to above-mentioned components (A) to (E). In addition, appropriate amounts of a carbon black reinforcing agent, metal oxide, softener, aging preventive, processing material, and the like may be added. In this instance, other rubbers may be blended as a rubber component. Although there are no specific limitations, styrene/butadiene copolymer rubber, butadiene rubber, isoprene rubber, butadiene/isoprene copolymer rubber, butadiene/styrene/isoprene copolymer rubber, acrylic rubber, butyl rubber, natural rubber, chloroprene rubber, and the like may be used as the other rubber.

Sulfur is a typical vulcanizing agent. Sulfur-containing compounds, peroxides, and the like can also be used. The crosslinking agent is added in an amount of usually 0.5-10 parts by mass, and particularly preferably 1-6 parts by mass, for 100 parts by mass of rubber components.

As specific examples of sulfur, powdered sulfur, precipitated sulfur, colloidal sulfur, surface-treated sulfur, and insoluble sulfur can be given. As specific examples of the sulfur compound, sulfur chloride, sulfur dichloride, and macromolecular polysulfide can be given. Sulfur compounds that cross-link by releasing active sulfur at a crosslinking temperature such as morpholine disulfide, alkylphenol disulfide, tetramethyl thiuram disulfide, dipentamethylene thiuram tetrasulfide, and selenium dimethyldithiocarbamate can also be given.

As examples of the organic peroxide, dicumylperoxide, di-t-butylperoxide, dit-butylperoxy-3,3,5-trimethylcyclohexane, t-butylhydroperoxide, t-butylcumylperoxide, benzoylperoxide, 2,5-dimethyl-2,5-di(t-butylperoxy)hexin-3,2,5-dimethyl-2,5-di(benzoylperoxy)hexane, 2,5-dimethyl-2,5-mono(t-butylperoxy)hexane, and 1,3-bis(t-butylperoxyisopropyl)benzene can be given. Of these, dicumylperoxide, di-t-butylperoxide, and di-t-butylperoxy-3,3,5-trimethylcyclohexane are preferably used. These organic peroxides can be used either individually or in combination of two or more.

As specific examples of the crosslinking promoter, sulfenamide compounds such as N-cyclohexyl-2-benzothiazolyl sulfenamide, N-oxydiethylene-2-benzothiazolyl sulfenamide, N,N-diisopropyl-2-benzothiazolyl sulfenamide; thiazole compounds such as 2-mercaptobenzothiazole, 2-(2',4'-dinitrophenyl)mercaptobenzothiazole, 2-(4'-morpholinodithio)benzothiazole, and dibenzothiazyl disulfide; guanidine compounds such as diphenyl guanidine, di-o-tolyl guanidine, di-o-nitrile guanidine, o-nitrile biguanide, and diphenyl guanidine phthalate; aldehyde-amine or aldehyde-ammonia compounds such as an acetaldehyde-aniline reactant, butylaldehyde-aniline condensate, hexamethylenetetramine, and acetaldehyde ammonia; imidazoline compounds such as 2-mercaptoimidazoline; thiourea compounds such as thiocarbanilide, diethylthiourea, dibutylthiourea, trimethylthiourea, and diorthotrithiourea; thiuram compounds such as tetramethylthiuram monosulfide, tetramethylthiuram disulfide, tetraethylthiuram disulfide, tetrabutylthiuram disulfide, and pentamethylenethiuram tetrasulfide; salts of dithio acid such as zinc dimethyldithiocarbamate, zinc diethyldithiocarbamate, zinc din-butyldithiocarbamate, zinc ethylphenyldithiocarbamate, zinc butylphenyldithiocarbamate, sodium dimethyldithiocarbamate, selenium dimethyldithiocarbamate, and tellurium dimethyldithiocarbamate; xantate compounds such as zinc dibutyl xanthogenate; zinc-containing acrylic acid compounds such as zinc acrylate, zinc hydroxyacrylate, and zinc methacrylate; zinc oxide; and the like can be given.

Specific examples of the crosslinking co-agent include sulfur; quinone dioxime compounds such as p-quinone dioxime; polyfunctional methacrylate compounds such as trimethylolpropane trimethacrylate and polyethylene glycol dimethacrylate; allyl compounds such as diallyl phthalate and triallyl cyanulate; maleimide compounds; and divinylbenzene.

As examples of the plasticizer, phthalic acid esters such as dimethyl phthalate, diethyl phthalate, dibutyl phthalate, diisobutyl phthalate, dioctyl phthalate, butyloctyl phthalate, di-(2-ethylhexyl)phthalate, diisooctyl phthalate, and diisodecyl phthalate; fatty acid esters such as dimethyl adipate, diisobutyl adipate, di-(2-ethylhexyl)adipate, diisooctyl adipate, diisodecyl adipate, octyldecyl adipate, di-(2-ethylhexyl)azelate, diisooctyl azelate, diisobutyl azelate, dibutyl sebacate, di-(2-ethylhexyl)sebacate, and diisooctyl sebacate; trimellitic acid ester esters such as isodecyl trimellitate, octyl trimellitate, n-octyl trimellitate, and isononyl trimellitate; and other plasticizers such as di-(2-ethylhexyl)fumarate, diethylene glycol monooleate, glyceryl monoricinolate, trilauryl phosphate, tristearyl phosphate, tri(2-ethylhexyl)phosphate, epoxidized soybean oil, and polyether ester can be given. These plasticizers may be used either individually or in combination of two or more. The plasticizer may be used by dispersing in unsaturated nitrile/conjugated diene rubber beforehand.

As examples of the carbon black reinforcing agent, SRF carbon black, ISAF carbon black, HAF carbon black, FEF carbon black, GPF carbon black, SRF carbon black, FT carbon black, MT carbon black, acetylene carbon black, and Ketjen Black can be given. These carbon blacks may be used either individually or in combination of two or more.

As the filler, silica, limestone powder, whitewash, light calcium carbonate, ultrafine activated calcium carbonate, special calcium carbonate, basic magnesium carbonate, kaolin clay, sintered clay, pyrophyllite clay, silane-treated clay, synthetic calcium silicate, synthetic magnesium silicate, synthetic aluminum silicate, magnesium carbonate, aluminum hydroxide, magnesium hydroxide other than the component (D) of the present invention, magnesium oxide, kaolin, sericite, talc, flour talc, wollastonite, zeolite, xonotonite, asbestos, PMF (processed mineral fiber), sepiolite, potassium titanate, ellestadite, gypsum fiber, glass balloon, silica balloon, hydrotalcite, flyash balloon, shirasu baloon, carbon balloon, alumina, barium sulfate, aluminum sulfate, calcium sulfate, molybdenum disulfide, and the like can be given. These fillers may be used either individually or in combination of two or more.

As the metal oxide, zinc oxide, activated zinc oxide, surface-treated zinc oxide, zinc carbonate, composite zinc oxide, composite activated zinc oxide, surface-treated magnesium oxide, magnesium oxide, calcium hydroxide, ultrafine calcium hydroxide, lead monoxide, minium, white lead, and the like can be given. These metal oxides may be used either individually or in combination of two or more.

As the softener, petroleum softener, vegetable oil softener, factice, and the like can be mentioned. As examples of the petroleum softener, aromatic softener, naphthene softener, and paraffin softener can be given. As examples of the vegetable oil softener, castor oil, cotton seed oil, linseed oil, rapeseed oil, soya bean oil, palm oil, cheering oil, arachis oil, and Japan tallow can be given. As the factice, brown factice, white factice, candy factice, and the like can be mentioned.

As examples of the aging preventive, aging preventives based on a compound such as naphthylamine, diphenylamine, p-phenylenediamine, quinoline, hydroquinone derivatives, a mono, bis, or trispolyphenol, thiobisphenol, hindert phenol, phosphate, imidazole, nickel dithiocarbamate, or phosphoric acid can be given. These softeners can be used either individually or in combination of two or more.

As examples of the processing material, stearic acid, oleic acid, lauryl acid, zinc stearate, calcium stearate, potassium stearate, sodium stearate, and stearyl amine can be given. These processing materials may be used either individually or in combination of two or more.

### Rubber product

The rubber product can be prepared from the rubber composition of the present invention in the following manner.

The rubber composition of the present invention and/or the other rubber components, filler, carbon-black reinforcing agent, softener, and other additives are kneaded using a banbury mixer or the like at 70-180°C. After cooling the kneaded product, a crosslinking agent such as sulfur and a crosslinking promoter are further added using a banbury mixer or mixing roll. The resulting mixture is then formed into a desired form. The formed product is heated at 130-200°C to effect crosslinking, thereby obtaining a desired crosslinked rubber product.

### EXAMPLES

The present invention will now be described in more detail by way of examples, which should not be construed as limiting the present invention.

In the examples, "part(s)" means "part(s) by weight" and "%" means "% by mass" unless otherwise indicated.

The hydrogenated diene polymers used in the Examples and Comparative examples were prepared by the following method.

### Preparation of hydrogenated diene polymer (1)

A reaction vessel with an internal volume of 101, of which the internal atmosphere was replaced with nitrogen, was charged with 5,000 g of cyclohexane, 300 g of 1,3-butadiene, 0.25 g of tetrahydrofuran, and 0.9 g ofn-butyllithium. After completion of a first stage polymerization at an initial temperature of 70°C, the reaction product was cooled to 20°C, whereupon 5.5 g of tetrahydrofuran was added. Then, 700 g of 1,3-butadiene was added to carry out a heat insulation polymerization. After the reaction, 0.6 g of methyl dichlorosilane was added to carry out a coupling reaction for 15 minutes. After the coupling reaction, the catalyst (n-butyllithium) was deactivated to obtain a copolymer before hydrogenation.

The reaction solution containing the resulting copolymer before hydrogenation was heated to 90°C, followed by the addition of a hydrogenation catalyst containing a titanocene compound as a main component. The hydrogenation reaction was carried out at a pressure of 0.8 MPa for two hours.

After the reaction and after reverting the reaction system to normal temperature-pressure conditions, the reaction product was removed from the vessel and charged into water to evaporate the solvent by steam distillation, thereby obtaining polymer (C-1). The hydrogenated diene polymer (C-1) was a (ii)-(iii)-(ii) type, with a hydrogenation degree of 98%, a vinyl bond content in the block (ii) polybutadiene of 12%, a vinyl bond content in the block (iii) polybutadiene of 30%, and a weight average molecular weight of 250,000.

### Preparation of hydrogenated diene polymer (2)

An autoclave with an internal volume of 5 l, of which the internal atmosphere was replaced with nitrogen, was charged with 2.5 kg of cyclohexane, 15 g of tetrahydrofuran, 165 g of styrene (block (i)), and 0.55 g of n-butyllithium. After polymerization at 50°C to the extent that the polymerization conversion rate was not less than 98 %, 220 g of 1,3-butadiene (block (iii)) was added to continue polymerization until the polymerization conversion rate of not less than 98 % was reached. Then, 165g of styrene (block (i)) was added to further continue the polymerization until the polymerization conversion rate of 100 % was reached.

After completing the polymerization reaction, the reaction solution was maintained at 70°C and the hydrogenated reaction was carried out using titanocene dichloride as a hydrogenation catalyst. The hydrogenated diene polymer (C-2) obtained was a (i)-(iii)-(i) type, with a bonded styrene content of 45 % by mass, a hydrogenation degree of 98%, a vinyl bond content in block C polybutadiene of 80%, and the weight average molecular weight of 100,000.

Properties of the polymer were determined by the following methods.

Vinyl bond content: The Hampton method using IR analysis was employed.

Hydrogenation degree: Calculated from 100 MHz, ¹H-NMR spectrum measured using tetrachloroethylene as a solvent.

Average molecular weight: A polystyrene-reduced value was determined by gel permeation chromatograph (GPC) at 135°C using trichlorobenzene as a solvent.

Bonded styrene content: Calculated from 270 MHz, ¹H-NMR spectrum measured using tetrachloroethylene as a solvent.

The following components were used in the Examples and Comparative Examples.
(A) Ethylene-a-olefin random copolymer
   (A-1) EPDM-1: EP57C [ML₁₊₄(100°C) = 90] manufactured by JSR Corporation
   (A-2) EPDM-2: EP21 [ML₁₊₄(100°C) = 38] manufactured by JSR Corporation
(B) Unsaturated nitrile/diene rubber
   (B-1) NBR-1: N217SH [AN content = 47] manufactured by JSR Corporation
   (B-2) NBR-2: N220SH [AN content = 41] manufactured by JSR Corporation
   (B-3) NBR-3: N237SH [AN content = 34] manufactured by JSR Corporation
   (B-4) NBR-4: N250S [AN content = 20] manufactured by JSR Corporation
(C) Hydrogenated diene polymer
   Polymers (C-1) and (C-2) obtained by the above production method.
(D) Magnesium hydroxide
   (D-1) Natural magnesium hydroxide (treated with fatty acid): Magseeds W-H3 manufactured by Konoshima Chemical Co., Ltd., volume average particle diameter: 2.5 µm, specific surface area: 8.9 cm²/g
   (D-2) Natural magnesium hydroxide (treated with wax): Magseeds W-W3 manufactured by Konoshima Chemical Co., Ltd., volume average particle diameter: 2.5 µm, specific surface area: 8.9 cm²/g
   (D-3) Natural magnesium hydroxide (treated with a silane coupling agent): S-1 manufactured by Konoshima Chemical Co., Ltd., volume average particle diameter: 4.0 µm, specific surface area: 5.0 cm²/g
   (R-1) Synthetic magnesium hydroxide (treated with fatty acid): Kisuma 5A manufactured by Kyowa Chemical Industry Co., Ltd., volume average particle diameter: 0.8 µm, specific surface area: 5.5 cm²/g
(E) Metal salt of ethylenically unsaturated carboxylic acid
   (E-1) Zinc methacrylate, Actor ZMA manufactured by Kawaguchi Chemical Industry Co., Ltd.

### Others

Carbon black: Seast SO manufactured by Tokai Carbon Co., Ltd.
Stearic acid: LUNAC S-30 manufactured by Kao Corp.
Zinc oxide: Zinc oxide manufactured by Seido Chemical Industry Co., Ltd. Organic peroxide: Percumyl-D40, dicumyl peroxide manufactured by Nippon Oil & Fats Co., Ltd. (purity: 40%)
Crosslinking co-agent: Highcross, trimethylolpropane trimethacrylate manufactured by Seiko Chemical Co., Ltd.
AN stands for an acrylonitrile unit.

### Example 1

50 parts by mass of EPDM-1 (A-1) as a component (A), 50 parts by mass of NBR-1 (B-1) as a component (B), 80 parts by mass of natural magnesium hydroxide treated with fatty acid (D-1) as a component (D), 10 parts by mass of FEF carbon black, 5 parts by mass of zinc oxide, and 1 part by mass of stearic acid were kneaded in a banbury mixer (manufactured by Kobe Steel, Ltd.). After cooling the kneaded material, 4 parts by mass of an organic peroxide and 2 parts by mass of a crosslinking co-agent were incorporated using a 10 inch open roller. The resulting product was formed using a mold for sheet with a dimension of 15 cm x 15 cm x 0.2 cm, then crosslinked for 20 minutes using a press-forming machine at 170°C to obtain a rubber sheet with a thickness of 2 mm.

Mechanical properties (tensile strength, tensile elongation), hardness, flame retardance, oil resistance, and weather resistance of the resulting crosslinked rubber composition were evaluated using the following methods. The results are shown in Table 1.
(1) Tensile strength and tensile elongation: measured according to JIS K6251
(2) Hardness: measured according to JIS K6253 using flexibility as an index.
(3) Flame retardance: The limiting oxygen index (LOI) was measured according to JIS K6296. The LOI is the minimum oxygen concentration (vol%) in a mixed gas of oxygen and nitrogen required for a test specimen with a width of 14 mm and a thickness of 2 mm to be continuously burnt under prescribed conditions. The larger the oxygen index, more excellent is the flame retardance.
(4) Weather resistance: production of cracks was examined when a sample was left under the conditions of an ozone concentration of 500 pphm at 40°C for 200 hours and subjected to static 20% elongation according to JIS-K6259.
(5) Oil resistance: a volume change (ΔV) of a sample was determined after the sample was dipped in an IRM903 test oil (No.3 oil) at 100°C for 70 hours according to JIS K6258.

### Comparative Example 1

(D) A crosslinked rubber composition was obtained in the same manner as in Example 1 except for replacing the natural magnesium hydroxide treated with fatty acid. (D-1) of the component (D) with synthetic magnesium hydroxide treated with fatty acid (R-1). The evaluation results are shown in Table 1.

**Table 1**

| | Example | | | | | | | | | Comparative example | | | |
|---|---|---|---|---|---|---|---|---|---|---|---|---|---|
| | 1 | 2 | 3 | 4 | 5 | 6 | 7 | 8 | 9 | 1 | 2 | 3 | 4 |
| EPDM-1 (A-1) | 50 | 50 | 50 | 50 | | 50 | 75 | 40 | 50 | 50 | 50 | 10 | |
| EPDM-2 (A-2) | | | | | 50 | | | | | | | | 100 |
| NBR-1 (B-1) | 50 | 50 | | 50 | 40 | 50 | 25 | 60 | | 50 | 50 | 90 | |
| NBR-2 (B-2) | | | 50 | | | | | | | | | | |
| NBR-3 (B-3) | | | | | | | | | 50 | | | | |
| NBR-4 (B-4) | | | | | 10 | | | | | | | | |
| Magnesium hydroxide (D-1) | 80 | 150 | 80 | | 80 | | 80 | 80 | 80 | | 40 | | |
| Magnesium hydroxide (D-2) | | | | 80 | | | | | | | | 150 | 150 |
| Magnesium hydroxide (D-3) | | | | | | 80 | | | | | | | |
| Magnesium hydroxide (R-1) | | | | | | | | | | 80 | | | |
| Magnesium hydroxide (R-2) | | | | | | | | | | | | | |
| Zinc oxide | 5 | 5 | 5 | 5 | 5 | 5 | 5 | 5 | 5 | 5 | 5 | 5 | 5 |
| Stearic acid | 1 | 1 | 1 | 1 | 1 | 1 | 1 | 1 | 1 | 1 | 1 | 1 | 1 |
| Carbon black | 10 | 10 | 10 | 10 | 10 | 10 | 10 | 10 | 10 | 10 | 10 | 10 | 10 |
| Organic peroxide | 4 | 4 | 4 | 4 | 4 | 4 | 4 | 4 | 4 | 4 | 4 | 4 | 4 |
| Crosslinking co-agent | 2 | 2 | 2 | 2 | 2 | 2 | 2 | 2 | 2 | 2 | 2 | 2 | 2 |
| Total | 202.0 | 272.0 | 202.0 | 202.0 | 202.0 | 202.0 | 202.0 | 202.0 | 202.0 | 202.0 | 162.0 | 272.0 | 272.0 |
| Mechanical properties | | | | | | | | | | | | | |
| Tensile strength (MPa) | 14.6 | 9.3 | 13.8 | 13.6 | 13.5 | 14.0 | 17.8 | 14.6 | 10.8 | 12.4 | 13.9 | 9.1 | 13.9 |
| Tensile elongation (%) | 400 | 388 | 369 | 370 | 356 | 370 | 572 | 473 | 308 | 390 | 636 | 291 | 708 |
| Hardness (Duro A) | 82 | 88 | 82 | 82 | 80 | 81 | 79 | 81 | 82 | 80 | 64 | 92 | 82 |
| Oil resistance IRM903: (ΔV) | 44.3 | 41.9 | 47.2 | 35.7 | 46.6 | 34.4 | 67.4 | 34.8 | 50.5 | 45.0 | 47.2 | 5.5 | 77.6 |
| Weather resistance | NC | NC | NC | NC | NC | NC | NC | NC | NC | NC | NC | C-4 | NC |
| Flame retardance Limiting oxygen index (%) | 29 | 35 | 29 | 29 | 29 | 29 | 28 | 29 | 29 | 29 | 21 | 35 | 31.5 |

### Examples 2-9 and Comparative Examples 2-4

Crosslinked rubber compositions were obtained in the same manner as in Example 1 from the components with proportions shown in Table 1. The evaluation results are shown in Table 1.

It can be seen from Table 1 that the rubber composition of Example 1 in which surface treated natural magnesium hydroxide was used exhibited improvement in the mechanical properties almost 18% better than the rubber composition of Comparative Example 1 in which surface treated synthetic magnesium hydroxide was used.

It can also be understood that the rubber compositions of Examples 4 and 6 in which surface treated natural magnesium hydroxide was used exhibited improvement in the mechanical properties almost 10-13% better than the rubber composition of Comparative Example 1 in which surface treated synthetic magnesium hydroxide was used.

It can also be understood that a flame retardant effect cannot be expected for the rubber composition of Comparative Example 2 in which the content of the magnesium hydroxide was less than 50 parts by mass, the weather resistance was poor in the rubber composition of Comparative Example 3 in which the content of the ethylene/α-olefin random copolymer was small, and the oil resistance was inadequate in the rubber composition of Comparative Example 4 in which only the ethylene/α-olefin random copolymer was used as a rubber component,

### Example 10

15 parts by mass of EPDM-1 (A-1) as a component (A), 70 parts by mass of NBR-1 (B-1) as a component (B), 15 parts by mass of a hydrogenated diene copolymer (C-1) as a component (C), 80 parts by mass of magnesium hydroxide (D-2) as a component (D), 10 parts by mass of carbon black, 5 parts by mass of zinc oxide, and 1 part by mass of stearic acid were kneaded in a banbury mixer (manufactured by Kobe Steel, Ltd.). After cooling the kneaded product, 4 parts by mass of an organic peroxide and 2 parts by mass of a crosslinking co-agent were incorporated using a 10 inch open roll. Extrusion processability and Mooney viscosity of the resulting composition were evaluated according to the following method. The remaining composition was formed using a mold for sheet with a dimension of 15 cm x 15 cm x 0.2 cm, then crosslinked for 20 minutes using a press-forming machine at 170°C to obtain a rubber sheet with a thickness of 2 mm. Mechanical strength, hardness, flame retardance, oil resistance, and weather resistance of the resulting sheet were evaluated.

Mechanical properties (tensile strength, tensile elongation), hardness, flame retardance, oil resistance, and weather resistance of the resulting crosslinked rubber composition were evaluated using the same methods as in Example 1. The results are shown in Table 2.
(1) Extrusion processability: A sample was extruded using a 50 mmf (L/D = 12) extruder (manufactured by Imanaka Machine Industry Co., Ltd.) at 100°C and a rotation of 30 rpm to observe the external appearance.
   ○: Good
   ×: Bad
(2) Mooney viscosity: measured according to JIS-K6300-1 under the conditions of ML₁₊₄ (125°C).

**Table 2**

| | Example | | | | | | | | Comparative example | | | |
|---|---|---|---|---|---|---|---|---|---|---|---|---|
| | 10 | 11 | 12 | 13 | 14 | 15 | 16 | 17 | 5 | 6 | 7 | 8 |
| EPDM-1 (A-1) | 15 | 15 | 15 | 15 | 15 | 30 | 65 | 30 | | 55 | 15 | |
| NBR-1 (B-1) | 70 | 70 | 70 | 70 | 70 | 70 | 35 | 70 | 70 | 30 | 70 | 100 |
| Hydrogenated diene polymer (C-1) | 15 | 15 | | 7.5 | 15 | | | | 30 | 15 | 15 | |
| Hydrogenated diene polymer (C-2), | | | 15 | 7.5 | | | | | | | | |
| Magnesium hydroxide (D-2) | 80 | 80 | 80 | 80 | 150 | 80 | 80 | 150 | 80 | 80 | 40 | 80 |
| Zinc methacrylate (E-1) | | 2 | 2 | 2 | 2 | | | 2 | | 2 | 2 | |
| Zinc oxide | 5 | 5 | 5 | 5 | 5 | 5 | 5 | 5 | 5 | 5 | 5 | 5 |
| Stearic acid | 1 | 1 | 1 | 1 | 1 | 1 | 1 | 1 | 1 | 1 | 1 | 1 |
| Carbon black | 10 | 10 | 10 | 10 | 10 | 10 | 10 | 10 | 10 | 10 | 10 | 10 |
| Crosslinking co-agent | 2 | | | | | 2 | 2 | | 2 | | | 2 |
| Organic peroxide | 4 | 4 | 4 | 4 | 4 | 4 | 4 | 4 | 4 | 4 | 4 | 4 |
| Total | 202 | 202 | 202 | 202 | 272 | 202 | 202 | 272 | 202 | 202 | 162 | 202 |
| Extrusion processability | ○ | ○ | ○ | ○ | ○ | ○ | × | ○ | ○ | × | ○ | ○ |
| Mooney viscosity ML₁₊₄ (125°C) | 43 | 44 | 46 | 45 | 48 | 44 | 44 | 48 | 37 | 44 | 41 | 47 |
| Mechanical properties | | | | | | | | | | | | |
| Tensile strength (MPa) | 16.0 | 17.4 | 16.3 | 17.0 | 15.0 | 14.4 | 13.3 | 13.4 | 16.9 | 16.0 | 17.0 | 16.7 |
| Tensile elongation (%) | 400 | 480 | 470 | 470 | 450 | 400 | 410 | 450 | 470 | 500 | 420 | 460 |
| Hardness (Duro A) | 85 | 86 | 89 | 88 | 95 | 81 | 80 | 92 | 86 | 85 | 80 | 82 |
| Oil resistance IRM903: (ΔV) | 44 | 41 | 41 | 41 | 40 | 42 | 70 | 40 | 45 | 110 | 47 | 5 |
| Flame retardance Limited oxygen index (%) | 30 | 30 | 30 | 30 | 38 | 30 | 30 | 38 | 30 | 30 | 23 | 30 |
| Weather resistance | NC | NC | NC | NC | NC | NC | NC | NC | A-3 | NC | NC | C-4 |

### Examples 11-17 and Comparative Example 5-8

Rubber compositions and crosslinked rubber compositions were obtained in the same manner as in Example 10 from the components with proportions shown in Table 2. The evaluation results are shown in Table 2.

The following discussion applies to the results shown in Table 2.

The rubber composition of Examples 10-17 exhibited good extrusion processability and excellently balanced mechanical properties, oil resistance, weather resistance, and flame retardance.

On the other hand, the rubber composition of Comparative Example 5 in which the component (A) was not used exhibited poor weather resistance. The composition of Comparative Example 6 containing the component (B) in an amount outside the scope of the present invention exhibited inferior oil resistance. The composition of Comparative Example 7 which did not contain the component (D) in an amount required in the present invention exhibited inferior flame retardance. The rubber compositions of Comparative Example 8 in which the components (A) and (C) were not used exhibited poor weather resistance.

### INDUSTRIAL APPLICABILITY

Since the rubber composition of the present invention has good flame resistance, weather resistance, and oil resistance, as well as excellent mechanical characteristics, the composition is useful for various applications such as a roll, belt, and sealing material for copying machines and printing machines, a covering material for wiring in instruments, an electric wire covering material, and an insulating tape for vehicle harnesses, as well as hoses, a covering material for the hoses, and a sealing material in buildings requiring high flame retardance and oil resistance.

## Claims

1. A flame retardant rubber composition comprising,
(A) 95-15 parts by mass of an ethylene/α-olefin random copolymer,
(B) 5-85 parts by mass of an unsaturated nitrile/conjugated diene rubber (provided that (A) + (B) = 100 parts by mass), and
(D) 50-400 parts by mass of surface-treated natural magnesium hydroxide.

2. A flame retardant rubber composition comprising,
(A) 3-62 parts by mass of an ethylene/α-olefin random copolymer,
(B) 35-94 parts by mass of an unsaturated nitrile/conjugated diene rubber,
(C) 3-62 parts by mass of a hydrogenated diene polymer (provided that (A) + (B) + (C) = 100 parts by mass), and
(D) 50-400 parts by mass of surface-treated natural magnesium hydroxide.

3. The flame retardant rubber composition according to claim 1 or 2, wherein the component (D) is magnesium hydroxide prepared by pulverizing natural mineral containing magnesium hydroxide as a main component and treating the surface of the pulverized material with at least one agent selected from the group consisting of fatty acid ester, wax, fatty acid, metal salt of fatty acid, hardened oil, silane coupling agent, and titanate coupling agent.

4. The flame retardant rubber composition according to any one of claims 1-3, wherein the ethylene/α-olefin random copolymer (A) has a Mooney viscosity (ML₁₊₄,100°C) of 20-300.

5. The flame retardant rubber composition according to any one of claims 1-4, wherein the unsaturated nitrile/conjugated diene rubber (B) has an unsaturated nitrile unit content of 33-70 % by mass.

6. The flame retardant rubber composition according to any one of claims 1-5, wherein the hydrogenated diene polymer (C) is a hydrogenated product of a block copolymer containing a polybutadiene block with a vinyl bond content of less than 25% and a conjugated-diene polymer block with a vinyl bond content of 25% or more, but 90% or less.

7. The flame retardant rubber composition according to any one of claims 1-6, further comprising (E) 1-10 parts by mass of the metal salt of ethylenically-unsaturated carboxylic acid for 100 parts by mass of the total of the component (A) and the component (B) or for 100 parts by mass of the total of the component (A), component (B), and component (C).

8. The flame retardant rubber composition according to any one of claims 1-7, having a limiting oxygen index (LOI) of 28% or more.

9. A rubber product produced by crosslinking the flame retardant rubber composition according to any one of claims 1-8.

10. An electric-wire covering material produced by crosslinking the flame retardant rubber composition according to any one of claims 1-8.

## Patentansprüche

1. Flammhemmende Kautschukzusammensetzung, die umfasst,
(A) 95 - 15 Massenteile eines statistischen Ethylen/α-Olefin Copolymers,
(B) 5 - 85 Massenteile eines Kautschuks aus ungesättigtem Nitril und konjugiertem Dien (vorausgesetzt, dass (A) + (B) = 100 Massenteile), und (D) 50 - 400 Massenteile an oberflächenbehandeltem natürlichem Magnesiumhydroxid.

2. Flammhemmende Kautschukzusammensetzung, die umfasst,
(A) 3 - 62 Massenteile eines statistischen Ethylen/α-Olefin Copolymers,
(B) 35 - 94 Massenteile eines Kautschuks aus ungesättigtem Nitril und konjugiertem Dien,
(C) 3 - 62 Massenteile eines hydrierten Dienpolymers (vorausgesetzt, dass (A) + (B) + (C) = 100 Massenteile), und
(D) 50 - 400 Massenteile an oberflächenbehandeltem natürlichem Magnesiumhydroxid.

3. Flammhemmende Kautschukzusammensetzung nach Anspruch 1 oder 2, wobei der Bestandteil (D) Magnesiumhydroxid ist, das durch Pulverisieren natürlichen Minerals, das Magnesiumhydroxid als einen Hauptbestandteil enthält, und Behandeln der Oberfläche des pulverisierten Materials mit zumindest einem Mittel, das aus der aus Fettsäureester, Wachs, Fettsäure, Metallsalz einer Fettsäure, gehärtetem Öl, Silankupplungsmittel und Titanatkupplungsmittel bestehenden Gruppe ausgewählt ist, hergestellt ist.

4. Flammhemmende Kautschukzusammensetzung nach einem der Ansprüche 1 - 3, wobei das statistische Ethylen/α-Olefin Copolymer (A) eine Mooney-Viskosität (ML₁₊₁₄, 100°C) von 20 - 300 aufweist.

5. Flammhemmende Kautschukzusammensetzung nach einem der Ansprüche 1 - 4, wobei der Kautschuk aus ungesättigtem Nitril und konjugiertem Dien (B) einen Gehalt an ungesättigten Nitrileinheiten von 33 - 70 Massen-% aufweist.

6. Flammhemmende Kautschukzusammensetzung nach einem der Ansprüche 1 - 5, wobei das hydrierte Dienpolymer (C) ein hydriertes Produkt eines Blockcopolymers ist, das einen Polybutadienblock mit einem Vinylbindungsgehalt von weniger als 25% und einen Polymerblock aus konjugiertem Dien mit einem Vinylbindungsgehalt von 25% oder mehr, aber 90% oder weniger, enthält.

7. Flammhemmende Kautschukzusammensetzung nach einem der Ansprüche 1 - 6, die ferner (E) 1 - 10 Massenteile des Metallsalzes von ethylenisch ungesättigter Carbonsäure für 100 Massenteile der Gesamtheit des Bestandteils (A) und des Bestandteils (B) oder für 100 Massenteile der Gesamtheit des Bestandteils (A), des Bestandteils (B) und des Bestandteils (C) aufweist.

8. Flammhemmende Kautschukzusammensetzung nach einem der Ansprüche 1 - 7, die einen limitierenden Sauerstoffindex (LOI) von 28% oder mehr aufweist.

9. Kautschukprodukt, das durch Vernetzen der flammhemmenden Kautschukzusammensetzung nach einem der Ansprüche 1 - 8 hergestellt ist.

10. Überzugsmaterial für einen elektrischen Draht, das durch Vernetzen der flammhemmenden Kautschukzusammensetzung nach einem der Ansprüche 1 - 8 hergestellt ist.

## Revendications

1. Composition de caoutchouc ignifuge comprenant,
(A) 95 à 15 parties en masse d'un copolymère aléatoire d'éthylène/α-oléfine,
(B) 5 à 85 parties en masse d'un caoutchouc de nitrile insaturé/diène conjugué (sous réserve que (A)+(B) = 100 parties en masse), et
(D) 50 à 400 parties en masse d'un hydroxyde de magnésium naturel traité en surface.

2. Composition de caoutchouc ignifuge comprenant,
(A) 3 à 62 parties en masse d'un copolymère aléatoire d'éthylène/α-oléfine,
(B) 35 à 94 parties en masse d'un caoutchouc de nitrile insaturé/diène conjugué,
(C) 3 à 62 parties en masse d'un polymère diénique hydrogéné (sous réserve que (A)+(B)+(C) = 100 parties en masse), et
(D) 50 à 400 parties en masse d'un hydroxyde de magnésium naturel traité en surface.

3. Composition de caoutchouc ignifuge selon la revendication 1 ou 2, dans laquelle le composant (D) est un hydroxyde de magnésium préparé par pulvérisation d'un hydroxyde de magnésium contenant un minéral naturel comme un composant principal et traitement de la surface du matériau pulvérisé avec au moins un agent choisi parmi le groupe consistant en un ester d'acide gras, une cire, un acide gras, un sel métallique d'acide gras, une huile hydrogénée, un agent de couplage à base de silane, et un agent de couplage à base de titanate.

4. Composition de caoutchouc ignifuge selon l'une quelconque des revendications 1 à 3, dans laquelle le copolymère aléatoire d'éthylène/α-oléfine (A) a une viscosité de Mooney (ML₁₊₄, 100°C) de 20 à 300.

5. Composition de caoutchouc ignifuge selon l'une quelconque des revendications 1 à 4, dans laquelle le caoutchouc de nitrile insaturé/diène conjugué (B) a une teneur en unités nitrile insaturé de 33 à 70% en masse.

6. Composition de caoutchouc ignifuge selon l'une quelconque des revendications 1 à 5, dans laquelle le polymère diénique hydrogéné (C) est un produit hydrogéné d'un copolymère à blocs contenant un bloc polybutadiène avec une teneur en liaisons vinyle de moins de 25% et un bloc polymère de diène conjugué avec une teneur en liaisons vinyle de 25% ou plus, mais 90% ou moins.

7. Composition de caoutchouc ignifuge selon l'une quelconque des revendications 1 à 6, comprenant en outre (E) 1 à 10 parties en masse du sel métallique d'acide carboxylique éthyléniquement insaturé pour 100 parties en masse du total du composant (A) et du composant (B) ou pour 100 parties en masse du total du composant (A), du composant (B) et du composant (C).

8. Composition de caoutchouc ignifuge selon l'une quelconque des revendications 1 à 7, ayant un indice critique d'oxygène (LOI) de 28% ou plus.

9. Produit de caoutchouc produit par réticulation de la composition de caoutchouc ignifuge selon l'une quelconque des revendications 1 à 8.

10. Matière d'isolation de fils électriques produite par réticulation de la composition de caoutchouc ignifuge selon l'une quelconque des revendications 1 à 8.
